# EUROPEAN PATENT SPECIFICATION

(11) **EP 0 562 295 B1**
(45) Date of publication and mention of the grant of the patent: **02.05.1997**
(21) Application number: 93102942.5
(22) Date of filing: 25.02.1993
(51) Int. Cl.: H04N 7/167

(54) **Method and apparatus for controlling several smart cards**
Methode und Vorrichtung zur Kontrolle mehrerer Chipkarten
Méthode et appareil pour contrôler plusieurs cartes à mémoire

(30) Priority: 04.03.1992 EP 92400563
(43) Date of publication of application: 29.09.1993
(73) Proprietor: THOMSON multimedia, 92400 Courbevoie (FR)
(72) Inventor: Diehl, Eric, F-67100 Strasbourg (FR); Hamon, Joel, F-67640 Lipsheim (FR)
(74) Representative: Hartnack, Wolfgang, Dipl.-Ing.

(56) References cited:
- EP-A- 0 427 600
- US-A- 5 060 079

## Description

### Field of the Invention

The present invention relates to a method and to an apparatus for controlling several smart cards.

### Background

Currently a pay TV decoder only works with one smart card and therefore uses only one card reader. If the user owns several smart cards each one dedicated to a specific broadcaster, each time he switches from one channel to another the user has to exchange the smart cards in order to be able to descramble the new channel.

US-A-5 060 079 discloses a TV with two card readers. However the cards store a time account, and both readers are always powered up to enable account decrementing.

EP-A-0 427 600 discloses a Pay-TV decoder with one card reader controlled by two microcontrollers, one dedicated to authorization processing, the other to supplying power supply voltages.

### Invention

It is one object of the invention to disclose a method for allowing a processor or a pay TV decoder to control more than one card reader. This object is realised by the inventive method disclosed in claim 1.

In principle the inventive method consists in controlling two or more smart cards (11, 21, 31), whereby said smart cards (11, 21, 31) can be inserted in a respective number of card readers (1, 2, 3) which are supplied from a power supply unit (4) with the required supply voltages, whereby said card readers (1, 2, 3) and said power supply unit (4) are controlled by a processor (5), which receives authorization management data (6) and which selects one of said smart cards which is suited for access to main data related to said authorization management data (6), whereby the power for the other card readers is switched off by said power supply unit (4) under the control of said processor (5).

Advantageous additional embodiments of the inventive method are disclosed in dependent claims 2 to 7.

It is a further object of the invention to disclose an apparatus which utilizes the inventive method. This object is realised by the inventive apparatus disclosed in claim 8.

In principle the inventive apparatus comprises two or more card readers (1, 2, 3) which are supplied from a power supply unit (4) with the required supply voltages, whereby said card readers (1, 2, 3) are connected with data lines (D I/O, RST, CLK) to a processor (5) and said card readers (1, 2, 3) and said power supply unit (4) are controlled by said processor (5), which receives authorization management data (6) and which selects one of said smart cards which is suited for access to main data related to said authorization management data (6), whereby the power for the other card readers is switched off by said power supply unit (4) under the control of said processor (5).

Advantageous additional embodiments of the inventive apparatus are disclosed in dependent claim 9.

In the last few years almost every new pay TV system introduced in the market has a control access with its security relying on smart cards. The satellite diffusion has brought in every home the possibility to watch or to listen to different channels encrypted with the same scrambling system, but managed by different program providers. With one standard decoder and a bunch of right smart cards, the user has access to a lot of pay TV, data or audio programs. But with the standard decoders, the user will have to change manually his smart cards in order to feed into the decoder the smart card corresponding to the tuned channel. In a period where zapping is a main component of the TV watcher's or radio listener's behaviour this constraint is archaic.

The invention enhances the ease of use of such conditional access systems. Several card readers are connected and controlled by a single processor. A special power supply unit which is controlled by the processor supplies the card readers with appropriate voltages.

### Drawing

Preferred embodiments of the invention are described with reference to the accompanying drawing:

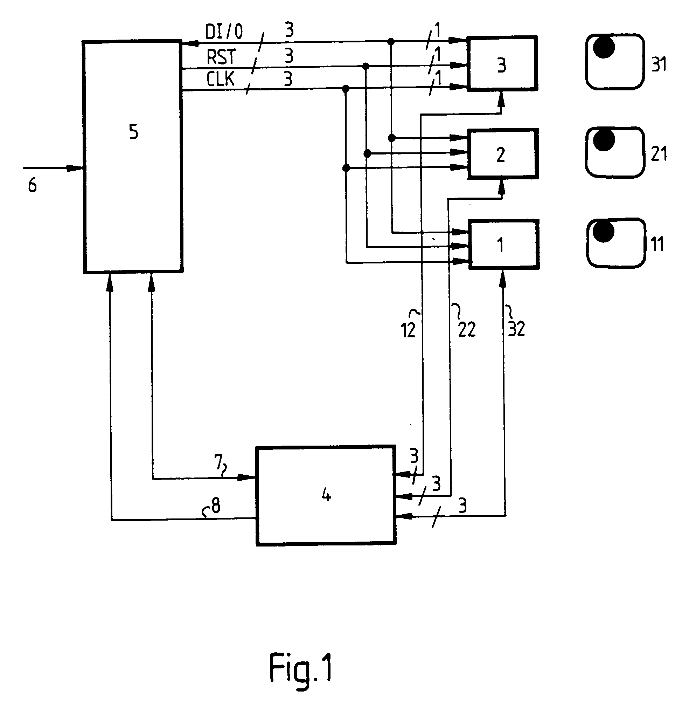

- Fig. 1: shows a pay TV decoder working with several smart cards.

### Preferred embodiments

In Fig. 1 a processor 5, which can be controlled by software, is connected to each of three card readers 1, 2 and 3 via a bi-directional data line D I/O, a reset line RST and a clock line CLK. These card readers are physical connectors in each of which a smart card 11, 21 and/or 31 can be inserted. In order to comply to the ISO 7816 standard, the following signals are provided for the card readers:
- power supply Vₚₚ and V_{cc} (in lines 12, 22, 32);
- ground voltage (not depicted in Fig. 1);
- reset signal (RST);
- clock signal (CLK)
- bidirectional data line (D I/O)
- a mechanical switch provides an electrical signal in order to detect the presence of the smart card in the card reader (DETECT, in lines 12, 22, 32).

Processor 5 receives authorization management data 6 from e.g. a TV, data or audio signal (i.e. main data), treats them and transfers them to the right smart card which will return, if authorized, the right information for processor 5 to descramble the received signal.
Processor 5 controls the generation of the power supply voltages Vₚₚ and V_{cc} for the smart cards and the communication with the smart cards. A power supply unit 4 generates the voltages V_{cc} and Vₚₚ complying to the standard ISO 7816-3 and is connected via lines 12, 22 and 32 to the respective card readers 1, 2 and 3. Power supply unit 4 is also connected with a command line 7 and with an interrupt line 8 to processor 5.
Due to the fact that processor 5 handles at one moment only one channel, only one smart card has to be active at any moment. Therefore the power supply unit 4 delivers at any moment the voltages V_{cc} and Vₚₚ only to one card reader and the voltages of the other card readers are tied to ground. In the block diagram of Fig. 1 processor 5 has one dedicated line for the signals D I/O, CLK and RST to each card reader. If the number of card readers is greater, advantageously a multiplexer can be used for these lines. This solution simplifies the software and reduces the number of pins needed on processor 5. For instance, in the case of 4 card readers instead of 12 pins only 5 would be requested.

In the following a pseudo code software offering minimal features is listed. The reaction to four events is described:

### card insertion

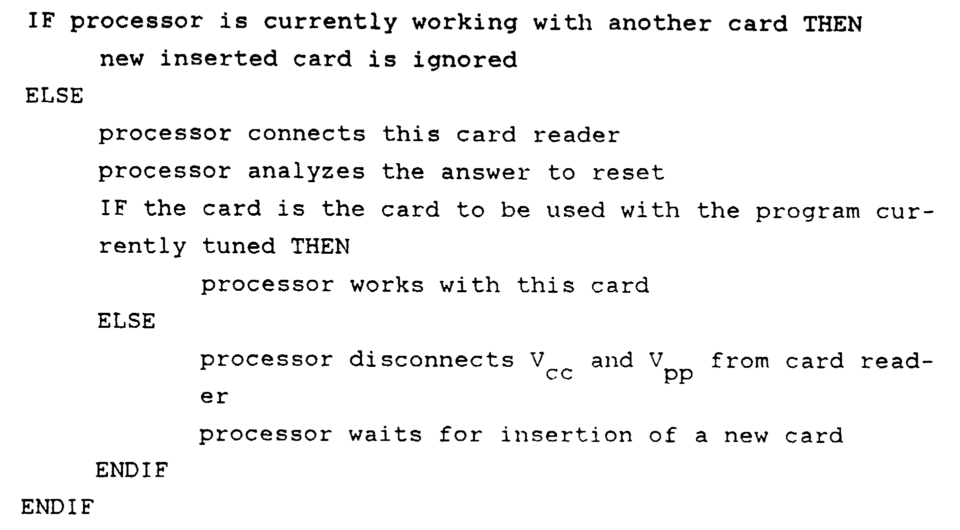

### card extraction

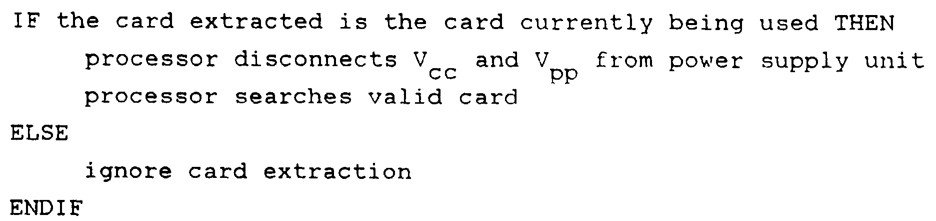

### channel changed

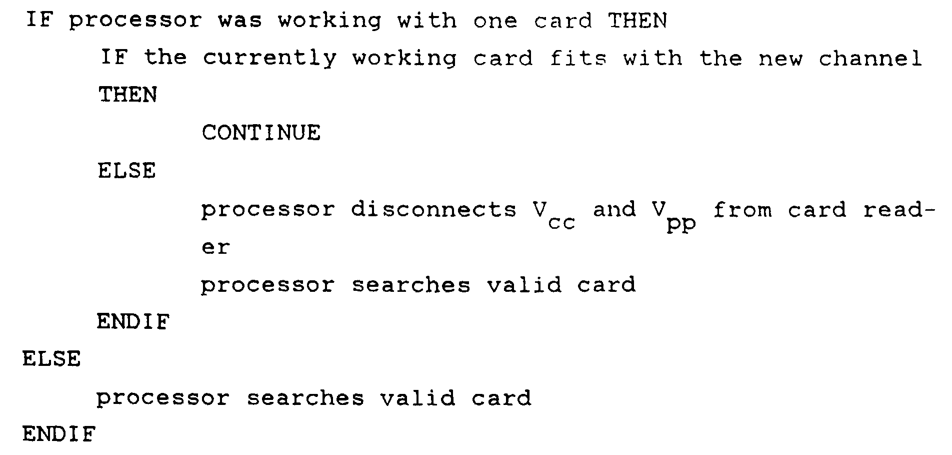

### search valid card

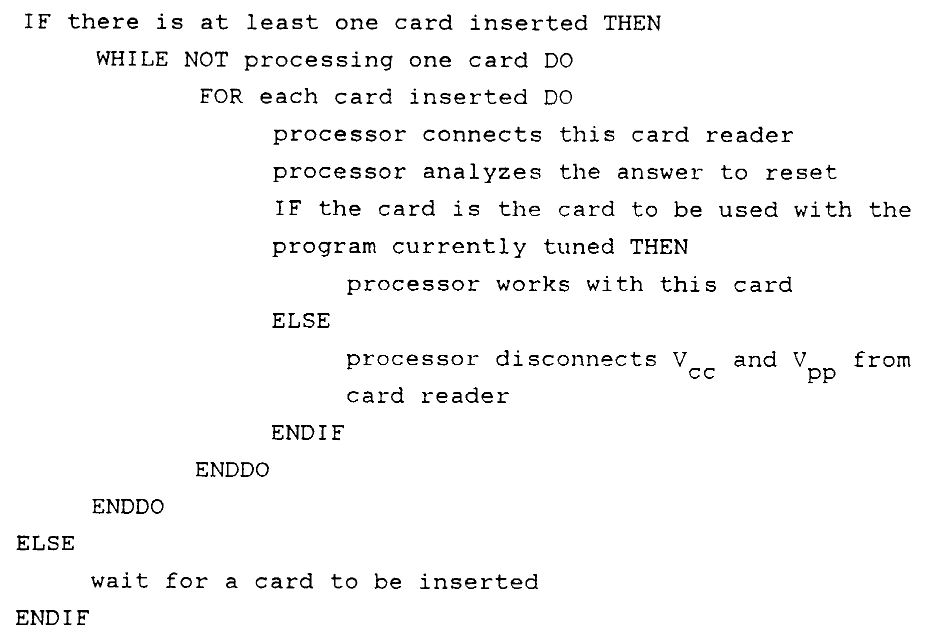

Some enhancements can be added:
- Each time that the processor performs an answer to reset to a new card, it memorizes the parameter of the card specially for which program provider it works. By that means during search valid card, it can switch directly to the right card reader instead of scanning each of them;
- When a channel is selected whose authorization management data can be evaluated by the smart card but for which the user is not entitled, the processor searches among all the cards inserted, if there is any other which is entitled for this program;
- Some pay TV transmissions (e.g. D2MAC) or radio programs have somewhere in the signal the description of broadcast programs of other channels. An improved decoder could then, according to the cards fitted in its card readers, indicate to the user which programs he is entitled to watch or to listen. This feature would greatly help the user, if he owns several cards.

The circuit described for Fig. 1 can be part of a VIDEOCRYPT, EUROCRYPT or any other smart card based pay TV decoder.

## Claims

1. Method for controlling two or more card readers (1, 2, 3) into which smart cards (11, 21, 31) can be inserted, said card readers (1, 2, 3) being supplied from a power supply unit (4) with the required supply voltages, **characterized** by controlling said card readers (1, 2, 3) and said power supply unit (4) by a processor (5), which receives authorization management data (6) and which selects one of said smart card readers having inserted a smart card which is suited for access to main data related to said authorization management data (6), and further characterized by switching off the power for the other card readers by said power supply unit (4) under the control of said processor (5).

2. Method according to claim 1, wherein said processor (5), power supply unit (4) and card readers (1, 2, 3) are part of a pay TV decoder or are part of a respective decoder for audio or other main data with conditional access.

3. Method according to claim 1 or 2, wherein said processor (5) selects automatically one of said smart cards which is suited for access to said main data.

4. Method according to any of claims 1 to 3, wherein said processor (5) determines all of said main data to which can be accessed with the smart card or smart cards inserted.

5. Method according to any of claims 1 to 4, wherein said processor (5) stores in memory means the related connection information already found between smart cards and allowed kind of main data and switches according to said stored connection information in case of choosing other main data instantly to that one of the card readers which is related to this main data without searching for other smart cards.

6. Method according to any of claims 1 to 5, wherein in case said authorization management data (6) can be evaluated by the actual smart card but for which respective main data an access is not allowed, said processor (5) searches among all the other smart cards inserted, if there is any other which is entitled for this main data.

7. Method according to any of claims 1 to 6, wherein said processor (5) determines from information data within the actual main data about other available main data, to which of said other available main data can be accessed with the smart card or smart cards inserted.

8. Apparatus for a method according to any of claims 1 to 7, comprising two or more card readers (1, 2, 3) which are supplied from a power supply unit (4) with the required supply voltages, wherein said card readers (1, 2, 3) are connected by data lines (D I/O, RST, CLK) to a processor (5) and said card readers (1, 2, 3) and said power supply unit (4) are controlled by said processor (5), which is adapted to receive authorization management data (6) and is characterized in that said processor is adapted to select one of said smart cards which is suited for access to main data related to said authorization management data (6), and to control said power supply unit to switch off the power for the other card readers.

9. Apparatus according to claim 8, wherein said data lines (D I/O, RST, CLK) are multiplexed data lines.

## Patentansprüche

1. Verfahren zur Kontrolle von zwei oder mehr Kartenlesern (1, 2, 3), in die Smart-Cards (11, 21, 31) eingesetzt werden können, wobei die Kartenleser (1, 2, 3) von einer Stromversorgungseinheit (4) mit den erforderlichen Versorgungs-Spannungen versorgt werden, dadurch gekennzeichnet, daß die Kartenleser (1, 2, 3) und die Stromversorgungseinheit (4) durch einen Prozessor (5) gesteuert werden, der Handhabungs-Berechtigungsdaten (6) empfängt, und der einen der Smart-Card-Leser, in den eine Smart-Card eingesetzt worden ist, auswählt, der für den Zugriff zu den auf die Handhabungs-Berechtigungsdaten (6) bezogenen Hauptdaten geeignet ist, und daß durch die Stromversorgungseinheit (4) unter Steuerung des Prozessors (5) der Strom für die anderen Kartenleser abgeschaltet wird.

2. Verfahren nach Anspruch 1, bei dem der Prozessor (5), die Stromversorgungseinheit (4) und die Kartenleser (1, 2, 3) Teil eines Pay-TV-Dekoders oder Teil eines entsprechenden Dekoders für Audio- oder andere Hauptdaten mit bedingtem Zugriff sind.

3. Verfahren nach Anspruch 1 oder 2, bei dem der Prozessor (5) automatisch eine der Smart-Cards auswählt, die für den Zugriff zu den Hauptdaten geeignet ist.

4. Verfahren nach einem der Ansprüche 1 bis 3, bei dem der Prozessor (5) alle Hauptdaten bestimmt, zu denen mit der oder den eingesetzten Smart-Cards Zugriff erlangt werden kann.

5. Verfahren nach einem der Ansprüche 1 bis 4, bei dem der Prozessor (5) in Speichermitteln die bezogene Verbindungsinformation speichert, die bereits zwischen Smart-Cards und der erlaubten Art von Hauptdaten gefunden wurde, und entsprechend der gespeicherten Verbindungsinformation im Fall der Wahl anderer Hauptdaten augenblicklich auf denjenigen Kartenleser umschaltet, der auf diese Hauptdaten bezogen ist, ohne nach anderen Smart-Cards zu suchen.

6. Verfahren nach einem der Ansprüche 1 bis 5, bei dem für den Fall, daß die Handhabungs-Berechtigungsdaten (6) durch die aktuelle Smart-Card ermittelt werden können, aber für entsprechende Hauptdaten ein Zugriff nicht erlaubt wird, der Prozessor (5) unter allen eingesetzten Smart-Cards sucht, ob es eine andere gibt, die für diese Hauptdaten berechtigt ist.

7. Verfahren nach einem der Ansprüche 1 bis 6, bei dem der Prozessor (5) aus Informationsdaten in den aktuellen Hauptdaten über andere verfügbare Hauptdaten bestimmt, zu welchen der anderen verfügbaren Hauptdaten die eingesetzte (n) Smart-Card (s) Zugriff erhalten kann (können).

8. Vorrichtung für ein Verfahren nach einem der Ansprüche 1 bis 7, umfassend zwei oder mehr Kartenleser (1, 2, 3), die von einer Stromversorgungseinheit (4) mit den erforderlichen Versorgungs-Spannungen versorgt werden, wobei die Kartenleser (1, 2, 3) durch Datenleitungen (D I/O, RST, CLK) mit einem Prozessor (5) verbunden sind, und wobei die Kartenleser (1, 2, 3) und die Stromversorgungseinheit (4) durch den Prozessor (5) gesteuert werden, der dafür eingerichtet ist, Handhabungs-Berechtigungsdaten (6) zu empfangen, dadurch gekennzeichnet, daß der Prozessor dafür eingerichtet ist, eine der Smart-Cards auszuwählen, die für den Zugriff zu den auf die Handhabungs-Berechtigungsdaten (6) bezogenen Hauptdaten geeignet ist, und die Stromversorgungseinheit so zu steuern, daß der Strom für die anderen Kartenleser abgeschaltet wird.

9. Vorrichtung nach Anspruch 8, bei der die Datenleitungen (D I/O, RST, CLK) Multiplex-Datenleitungen sind.

## Revendications

1. Méthode pour contrôler deux ou plusieurs lecteurs de carte (1, 2, 3) dans lesquels des cartes à puce (11, 21, 31) peuvent être insérées, lesdits lecteurs de carte (1, 2, 3) étant alimentés par une unité d'alimentation électrique (4) avec les tensions d'alimentation requises, caractérisée en ce que le contrôle desdits lecteurs de carte (1, 2, 3) et de ladite unité d'alimentation électrique (4) est assuré par un processeur (5), qui reçoit des données de gestion des autorisations (6) et qui sélectionne un desdits lecteurs de carte à puce dans lequel se trouve insérée une carte à puce qui convient pour accéder aux données principales associées auxdites données de gestion des autorisations (6), et de plus caractérisée par la coupure de l'alimentation des autres lecteurs de carte par ladite unité d'alimentation électrique (4) sous contrôle dudit processeur (5).

2. Méthode selon la revendication 1, dans laquelle lesdits processeur (5), unité d'alimentation électrique (4) et lecteur de carte (1, 2, 3) font partie d'un décodeur de télévision à péage ou font partie d'un décodeur respectivement pour des données audio ou pour d'autres données principales à accès conditionnel.

3. Méthode selon la revendication 1 ou 2, dans laquelle ledit processeur (5) sélectionne automatiquement une desdites cartes à puce qui convient pour accéder auxdites données principales.

4. Méthode selon l'une quelconque des revendications 1 à 3, dans laquelle ledit processeur (5) détermine toutes lesdites données principales auxquelles on peut accéder avec la carte à puce ou les cartes à puce insérées.

5. Méthode selon l'une quelconque des revendications 1 à 4, dans laquelle ledit processeur (5) stocke dans un moyen de mémoires, les informations de connexion correspondantes déjà trouvées entre les cartes à puce et les types de données principales autorisés et commute instantanément, selon lesdites informations de connexion stockées, dans le cas du choix d'autres données principales, vers celui des lecteurs de carte qui correspond à ces données principales sans avoir à rechercher d'autres cartes à puce.

6. Méthode selon l'une quelconque des revendications 1 à 5, dans laquelle, au cas où lesdites données de gestion des autorisations (6) peuvent être évaluées par la carte à puce courante mais où l'accès aux données principales respectives n'est pas autorisé, ledit processeur (5) cherche parmi toutes les autres cartes à puce insérées s'il y en a une autre qui est autorisée pour ces données principales.

7. Méthode selon l'une quelconque des revendications 1 à 6, dans laquelle ledit processeur (5) détermine, à partir de données d'informations contenues dans les données principales courantes concernant d'autres données principales disponibles, auxquelles desdites autres données principales disponibles on peut accéder avec la carte à puce ou les cartes à puce insérées.

8. Appareil pour une méthode selon l'une quelconque des revendications 1 à 7, comprenant deux ou plusieurs lecteurs de carte (1, 2, 3) qui sont alimentés par une unité d'alimentation électrique (4) avec les tensions d'alimentation requises, dans lequel lesdits lecteurs de carte (1, 2, 3) sont connectés par des lignes de données (D I/O, RST, CLK) à un processeur (5) et lesdits lecteurs de carte (1, 2, 3) et ladite unité d'alimentation électrique (4) sont contrôlés par ledit processeur (5), qui est adapté pour recevoir des données de gestion des autorisations (6) et qui est caractérisé en ce que ledit processeur est adapté pour sélectionner une desdites cartes à puce qui convient pour accéder aux données principales associées auxdites données de gestion des autorisations (6), et pour contrôler ladite alimentation des autres lecteurs de carte.

9. Appareil selon la revendication 8, dans lequel lesdites lignes de données (D I/O, RST, CLK) sont des lignes de données multiplexées.
